(19) Europäisches Patentamt
European Patent Office
Office européen des brevets

(11) EP 1 176 164 B1

(12) EUROPEAN PATENT SPECIFICATION

(45) Date of publication and mention of the grant of the patent:
**18.01.2006 Bulletin 2006/03**

(51) Int Cl.:
***C08K 3/34*** *(2006.01)* ***C08K 3/04*** *(2006.01)*
***C08L 21/00*** *(2006.01)*

(21) Application number: **01306485.2**

(22) Date of filing: **27.07.2001**

(54) **Rubber composition for tyre treads and pneumatic tyre having tread thereof**

Katschukzusammensetzung für Reifenlaufflächen und Reifen mit daraus bestehender Lauffläche

Composition de caoutchouc pour bande de roulement et pneu avec bande de roulement à base de cette composition

(84) Designated Contracting States:
**DE FR GB**

(30) Priority: **28.07.2000 JP 2000229723**

(43) Date of publication of application:
**30.01.2002 Bulletin 2002/05**

(73) Proprietor: **SUMITOMO RUBBER INDUSTRIES LIMITED**
**Kobe-shi,**
**Hyogo-ken (JP)**

(72) Inventors:
- **Yagi, Noriko,**
**Sumitomo Rubber Industries Limited**
**Kobe-shi,**
**Hyogo-ken (JP)**
- **Muraoka, Kiyoshige,**
**Sumitomo Rubber Ind. Ltd.**
**Kobe-shi,**
**Hyogo-ken (JP)**

(74) Representative: **Manitz, Finsterwald & Partner GbR**
**Postfach 31 02 20**
**80102 München (DE)**

(56) References cited:
**EP-A- 0 697 432** **EP-A- 0 875 532**
**EP-A- 0 894 819**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 176 164 B1

## Description

The present invention relates to a rubber composition for tyre treads and a pneumatic tyre having a tread made of the rubber composition, and particularly relates to a rubber composition for tyre treads significantly improving tyres in grip performance on a wet road with remaining low fuel consumption of automobiles and a pneumatic tyre having a tread made of the rubber composition.

In recent years, tyres for automobiles require various performances such as controllability in driving, abrasion resistance, and the ride comfort as well as low fuel consumption and are improved variously in these performances. Examples of methods improving the performances, such as the performance in braking and driving on wet roads at high driving speed, and the controllability in driving, include increasing the grip force on a road surface, increasing the cornering performance by increasing the block stiffness of tyre tread pattern to inhibit the tyre from block deformation at cornering, and inhibiting hydroplaning from arising by inhibiting groove in the tyre tread from deforming to maintain good water draining.

Recently, to satisfy these requirements, tyres having an increased grip performance on a wet road surface have been provided by using rubber compositions obtained by mixing silica with SBR of high styrene unit content for the treads thereof.

However, such rubber compositions for tyre treads provide an increased grip force at a low temperature of at most 15°C (road surface temperature), but does not provide a sufficient grip force on a wet or semi-wet road surface. Rubber compositions comprising silica decrease in stiffness and significantly in grip force with the repetition of driving. Also rubber compositions comprising silica have problems such as increased Mooney viscosity and decreased processability, for example, in extruding particularly if the silica is dispersed insufficiently.

Various proposals are made traditionally to solve the problems mentioned above. As rubber compositions to improve grip performance of tyres, for example, Japanese unexamined patent publication No: 133375/1995, and No: 311245/1996 disclose rubber compositions obtained by mixing calcined clay with diene rubbers, and Japanese unexamined patent publication No: 3373/1996 discloses rubber compositions obtained by mixing vulcanised rubber powders comprising diene rubbers and kaolinite with specific kinds of diene rubbers. As rubber composition showing same effects, Japanese unexamined patent publication No: 59893/1996 discloses rubber compositions obtained by mixing specific kinds of inorganic powders and carbon black with SBR comprising specific amounts of styrene units, and Japanese unexamined patent publication No: 149954/1995 and No: 31250/1997 disclose rubber compositions obtained by mixing kaolinite base clay with diene rubbers having a specific ratio of 1,2-bond in the butadiene units part.

EP-A-0 894 819 discloses a rubber composition for tyre treads comprising a diene rubber containing a styrene-butadiene rubber, 0 to 60 parts by weight of carbon black, 20 to 50 parts by weight of silica and 5 to 20 parts by weight of kaolin clay having a median particle size of from about 0.2 microns, all parts being based on 100 parts of base rubber composition.

EP-A-0 697 432 describes a rubber composition for tyre treads comprising a rubber component containing a styrene-butadiene rubber, 5 to 150 parts by weight of a powdery inorganic compound of the formula $mM^1 \cdot xSiO_y \cdot zH_2O$ and having a particle size from 0.01 to 10 μm, e.g. clay, 5 to 170 parts by weight of carbon black and 5 to 100 parts by weight of silica, all parts being based on 100 parts by weight of the rubber component.

EP-A-0 875 532 relates to treated clay products which are used as a compound of rubber compositions comprising a diene rubber containing a styrene-butadiene rubber and at least one non-clay filler, e.g. carbon black and silica. The treated clay products have median Malvern particle sizes ranging from 0.4 to 2.9 μm.

However, none of these rubber compositions show excellent wet grip performance with a remained low heat build up characteristic and without decreased processability and decreased abrasion resistance.

One of the objects of the present invention is to provide a rubber composition for tyre treads that significantly improves tyres in wet skid performance without decreased abrasion resistance and increased rolling resistance and to provide an improved pneumatic tyre.

Accordingly the present invention provides a rubber composition for tyre treads, comprising (A) 100 parts by weight of a diene rubber comprising at least 35% by weight of a styrene-butadiene rubber, (B) 5 to 50 parts by weight of clay, (C) at least 5 parts by weight of silica having a nitrogen absorption specific surface area of 100 to 300 $m^2/g$, and (D) 5 to 65 parts by weight of carbon black having a nitrogen absorption specific surface area of 70 to 300 $m^2/gm$, and has a total amount of (B) clay and (C) silica of 40 to 79 parts by weight and a total amount of (B) clay, (C) silica and (D) carbon black of 41 to 80 parts by weight, wherein (B) clay has an average particle size of 0.5 to 10 μm.

Also the rubber composition may comprise (E) a silane coupling agent.

A second aspect provides a pneumatic tyre which has a tread made of the above mentioned rubber compositions.

A rubber composition of the present invention comprises (A) a diene rubber as a rubber component. Examples of the diene rubber used in the present invention include natural rubber and synthetic diene rubbers such as a styrene-butadiene rubber (SBR), a polybutadiene rubber (BR), a polyisoprene rubber (IR), an ethylene-propylene-diene rubber (EPDM), a chloroprene rubber (CR), an acrylonitrile-butadiene rubber (NBR), and a butyl rubber (IIR).

The diene rubber necessarily comprises at least 35% by weight of SBR, but can comprise at least two kinds of diene rubbers. If the diene rubber comprises less than 35% by weight of SBR then it has decreased processability in tyre production, and cannot give the low fuel consumption compatible with the wet grip performance. The diene rubber comprises preferably 35 to 100% by weight, and more preferably 40 to 100% by weight of SBR from the viewpoint of processability.

The SBR comprises preferably 15 to 60% by weight of styrene units. If the SBR comprises less than 15% by weight of styrene units then it does not provide the desirable grip performance at low and high temperature range. If the SBR comprises more than 60% by weight of styrene units then it does not provide the desirable grip performance because of excessive block stiffness.

The SBR used can be produced by any polymerisation process such as emulsion polymerisation or solution polymerisation.

The rubber composition of the present invention comprises clay. The clay has an average particle size of 0.5 to 10 $\mu$m. Clay having an average particle size of more than 10 $\mu$m does not show sufficient reinforcing effect and tends to decrease the abrasion resistance. Clay having too small an average particle size agglomerates easily, is difficult to disperse in rubber components, and does not provide a rubber composition having desirable performance in some cases. The clay has an average particle size of 0.5 to 10 $\mu$m from the viewpoint of, for example, the balance among reinforcing performance, the wet grip perfonnance, the low fuel consumption performance and the like.

A rubber composition of the present invention comprises clay of 5 to 50 parts by weight, more preferably 10 to 40 parts by weight. Clay of less than 5 parts by weight provides a low improvement in wet grip performance. Clay of more than 50 parts by weight decreases abrasion resistance.

The rubber composition of the present invention comprises silica. Silica is used to supplement the reinforcing performance with clay and to decrease the rolling resistance. The silica used has a nitrogen absorption specific surface area ($N_2SA$) of 100 to 300 $m^2/g$, and preferably 130 to 280 $m^2/g$. Silica having less than 100 $m^2/g$ of $N_2SA$ shows too low a reinforcing effect. Silica having more than 300 $m^2/g$ of $N_2SA$ shows a decreased dispersibility and increases the heat build up characteristic.

Examples of silica to be used include silica generally used for reinforcing rubbers without limitation, for example, silica from a dry process, and silica from a wet process.

The rubber composition comprises silica of at least 5 parts by weight, based on 100 parts by weight of the rubber component. Silica at less than 5 parts by weight does not show sufficient reinforcing effect and sufficient effect decreasing the rolling resistance The rubber composition of the present invention comprises carbon black. The carbon black has a nitrogen absorption specific surface area ($N_2SA$) of 70 to 300 $m^2/g$, and preferably 90 to 250 $m^2/g$. Carbon black having less than 70 $m^2/g$ of $N_2SA$ does not provide sufficient abrasion resistance because of insufficient reinforcing performance. Carbon black having 300 $m^2/g$ of $N_2SA$ shows a low dispersibility and increases the heat build up characteristic. Examples of carbon black are not limited and include HAF, ISAF and SAF.

The rubber composition of the present invention comprises carbon black of 5 to 65 parts by weight based on the rubber component. Carbon black at less than 5 part by weight shows a low reinforcing performance and decrease the abrasion resistance. Carbon black of more than 65 parts by weight shows a low dispersibility and does not provide the desirable performances.

The rubber composition of the present invention comprises (B) clay and (C) silica in a total amount of 40 to 79 parts by weight based on 100 parts by weight of the rubber component The rubber composition of the present invention comprises (B) clay, (C) silica and (D) carbon black in a total amount of 41 to 80 parts by weight based on 100 parts by weight of the rubber component from the viewpoints of effects by the addition, the properties and the like.

The rubber composition of the present invention can comprise a silane-coupling agent strengthening the force bond between the fillers and the rubber component to give increased abrasion resistance. A silane-coupling agent preferably used is represented by the formula: $Y_3$-Si-$C_nH_{2n}$A. In the formula, Y is an alkyl or alkoxy group having 1 to 4 carbon atoms, or chlorine atom. Each of three Y can be the same or different from each other. The subscript n is an integer of I to 6. A is a group selected from the group consisting of -$S_mC_nH_{2n}$Si-$Y_3$ group, nitroso group, mercapto group, amino group, epoxy group, vinyl group, chlorine atom, imido group and -$S_m$Z group, wherein the subscript m is an integer of 1 to 6, the subscript n and Y are defined about, and Z is the following formulae (1), (2) or (3).

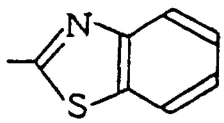

(1)

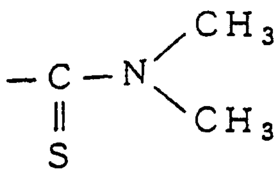

(2)

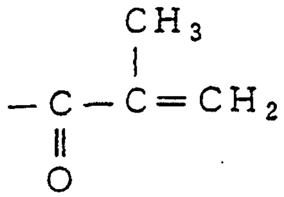

(3)

Examples of the silane-coupling agent include bis(3-triethoxysililpropyl)tetrasulfide, bis(2-triethoxysililethyl)tetrasulfide, bis(3-trimethoxysililpropyl)tetrasulfide, bis(2-trimethoxysililethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-nitropropyltrimethoxysilane, 3-nitropropyltriethoxysilane, 3-chloropropyltrimethoxysilane, 3-chloropropyltriethoxysilane, 2-chloroethyltrimethoxysilane, 2-chloroethyltriethoxysilane, 3-trimethoxysililpropyl-N, N-dimethylthiocarbamoyltetrasulfide, 3-triethoxysililpropyl-N, N-dimethylthiocarbamoyltetrasulfide, 2-triethoxysililethyl-N, N-dimethylthiocarbamoyltetrasulfide, 3-trimethoxysililpropylbenzothiazoltetrasulfide, 3-triethoxysililpropylbenzothiazoltetrasulfide, 3-triethoxysililpropylmethacrylatemonosulfide, 3-trimethoxysililpropylmethacrylatemonosulfide.

Examples of the silane-coupling agent having three Y different from each other include
bis(3-diethoxymethylsililpropyl)tetrasulfide,
3-mercaptopropyldimethocymethylsilane,
3-nitropropyldimethoxymethylsilane,
3-chloropropyldimethoxymethylsilane,
dimethoxymethylsililpropyl-N, N-dimethylthiocarbamoyltetrasulfide,
dimethoxymethylsililpropylbenzothiazoltetrasulfide.
Bis(3-triethoxysililpropyl)tetrasulfide, and
3-trimethoxysililpropylbenzothiazoltetrasulfide are preferable from the viewpoint of the compatibleness between effects of adding the coupling agents and the costs.

Silane-coupling agents can be used singly or in combination of at least two of them.

Silanc-coupling agents are used preferably in an amount of 1 to 20% by weight based on the total amount of clay and silica. Silane-coupling agents at less than 1% by weight do not show sufficient effects. More than 20% by weight does not provide increased coupling effects corresponding to the increased cost and decreases the reinforcing performance and the abrasion resistance. Silane-coupling agents are used preferably at an amount of 2 to 15% by weight from the viewpoints of dispersion effects and coupling effects.

The rubber composition of the present invention can comprise other components or agents used in the general rubber industry such as softeners, antioxidants, vulcanisation agents, vulcanisation accelerators, and vulcanisation accelerator assistants as well as the rubber components, clay, silica, carbon black, and silane-coupling agents.

The rubber composition for tyre treads of the present invention is useful for treads of pneumatic tyres, and improves the wet grip performance significantly without decreasing the abrasion resistance and the rolling resistance.

The present invention provides a rubber composition for tyre treads providing a significantly improved wet skid performance without decreasing the abrasion resistance and without decreasing the rolling resistance of the tyres and an improved pneumatic tyre having a tread made of the rubber composition.

<u>EXAMPLES</u>

The present invention is explained in more detail based on the following Examples, but the present invention is not limited thereto.

Raw materials used in Examples and Comparative Examples are shown below.

Natural Rubber: RSS #3 grade

Diene rubber (SBR): SBR1502 comprising 23.5% by weight of styrene units available from Japan Synthetic Rubber Co. Ltd.
Clay: Crown clay comprising 86% by weight of particles having a size of at largest 2 μm and 4% by weight of particles having a size of larger than 2 μm and at largest 5 μm available from South Eastern Co. Ltd.
Silica: Ultrasil VN3 having 210 $m^2/g$ of $N_2SA$ available from Degussa Co. Ltd.
Carbon black: SHOWBLACK N220 having 125 $m^2/g$ of $N_2SA$ available from Showa Cabot K.K.
Silane-coupling agent: Si69 (bis(3-triethoxysililpropyl)tetrasulfide) available from Degussa Co. Ltd.
Aromatic oil: JOMO PROCESS X140 available from Japan Energy Corporation.
Antioxidant: NOCRAC 6C (N-(1,3-dimethylbutyl)-N'-phenyl-p-phenylenediamine) available from Ouchishinko Chemical Industrial Co. Ltd.
Stearic acid: available from NOF Corporation.
Zinc Oxide: zinc oxide No. I available from Mitsui Mining & Smelting Co. Ltd.
Sulfur: sulfur powders available from Tsurumi Chemical Co. Ltd.
Vulcanisation accelerator TBBS: Nocceller NS (N-tert-butyl-2-benzothiazylsulfenamide) available from Ouchishinko Chemical Industrial Co. Ltd.
Vulcanisation accelerator DPG: Nocceller D (N, N'-diphenylguanidine) available from Ouchishinko Chemical Industrial Co. Ltd.

Evaluation methods used in Example 1 and Comparative Examples are shown below.

Abrasion Test

A Lamboum abrasion test was conducted by using a Lambourn abrasion tester under the conditions of 20°C of temperature, 20% slip ratio, and 5 min. testing time. The volume loss of each composition was calculated and indexed according to the following equation based on Comparative Example 1 indexed 100. A high value of the index shows an excellent performance in the abrasion resistance.

$$\text{(Lambourn abrasion index)} = \text{(Volume loss of Comp. Ex. 1)} + \text{(Volume loss of each compositions)} \times 100$$

Rolling Resistance

The loss tangent (tan δ) of each composition was measured by using a Viscoelastic Spectrometer (VES) available from Iwamoto Seisakusho K.K. under the conditions of 70°C of temperature, 10% initial strain, and 2% dynamic strain, and indexed according to the following equation (Rolling Resistance Index). A high value of the index shows an excellent performance in the rolling resistance.

$$\text{(Rolling Resistance Index)} = (\tan\delta \text{ of Comp. Ex. 1}) \div (\tan\delta \text{ of each composition}) \times 100$$

Wet Skid Test

Skid resistance was measured by using a portable skid resistance tester available from Stanley Co. Ltd. according to ASTM E303-83 under 25°C, and indexed according to the following equation (Wet Skid Index). A high value of the index shows an excellent performance in the wet skid performance.

$$(\text{Wet Skid Index}) = (\text{Skid resistance of each composition}_ \div (\text{Skid resistance of Comp. Ex. 1}) \times 100$$

EXAMPLE 1 and COMPARATIVE EXAMPLES 1 to 9

Each rubber compositions for the tests was obtained by mixing components according to the proportions shown in Table 1. Vulcanised rubber compositions were obtained by vulcanising the rubber compositions in a press at 170°C for 20 min.

Results are shown in Table 1.

TABLE 1

| | Com. Ex. 7 | Com. Ex. 8 | Ex. 1 | Com. Ex. 9 | Com. Ex. 1 | Com. Ex. 2 | Com. Ex. 3 | Com. Ex. 4 | Com. Ex. 5 | Com. Ex. 6 |
|---|---|---|---|---|---|---|---|---|---|---|
| Raw materials (parts by weight) | | | | | | | | | | |
| Natural Rubber | - | - | - | 65 | - | - | - | - | 75 | - |
| SBR | 100 | 100 | 100 | 35 | 100 | 100 | 100 | 100 | 25 | 100 |
| Clay | 5 | 15 | 30 | 10 | - | - | - | 10 | 10 | 10 |
| Silica | 30 | 20 | 20 | 20 | 60 | - | 30 | 10 | 10 | 40 |
| Carbon Black | 25 | 25 | 25 | 30 | 0 | 60 | 30 | 40 | 40 | 60 |
| Silane-Coupling Agent | 3.5 | 3.5 | 5 | 3 | 6 | - | 3 | 2 | 2 | 5 |
| Aromatic Oil | 8 | 8 | 8 | 8 | 20 | 20 | 20 | 8 | 8 | 15 |
| Antioxidant | 1 | 1 | 1 | 1 | 1 | 1 | 1 | 1 | 1 | 1 |
| Stearic Acid | 2 | 2 | 2 | 2 | 2 | 2 | 2 | 2 | 2 | 2 |
| Zinc Oxide | 3 | 3 | 3 | 3 | 3 | 3 | 3 | 3 | 3 | 3 |
| Sulfur | 1.5 | 1.5 | 1.5 | 1.5 | 1.5 | 1.5 | 1.5 | 1.5 | 1.5 | 1.5 |
| Vulcanisation accelerator TBBS | 1 | 1 | 1 | 1 | 1 | 1 | 1 | 1 | 1 | 1 |
| Vulcanisation accelerator DPG | 0.5 | 0.5 | 0.5 | 0.5 | 0.5 | 0.5 | 0.5 | 0.5 | 0.5 | 0.5 |
| Characteristics | | | | | | | | | | |
| Lamboum Abrasion Index | 107 | 106 | 103 | 102 | 100 | 112 | 105 | 109 | 107 | 104 |
| Rolling Resistance Index | 102 | 105 | 108 | 101 | 100 | 83 | 95 | 94 | 87 | 80 |
| Wet Skid Index | 110 | 116 | 120 | 102 | 100 | 85 | 91 | 90 | 84 | 93 |

Improved wet skid performances were shown without decreased abrasion resistances and decreased rolling resistances in Example 1 wherein (B) clay, (C) silica and (D) carbon black were used in combination with defined proportions.

Insufficient wet skid performances were found in Comparative Examples 1 to 3 wherein each of (C) silica and (D) carbon black was used singly or (C) silica and (D) carbon black were used in combination without (B) clay. Insufficient wet skid performances and rolling resistances were found in Comparative Examples 4 and 5 wherein (B) clay, (C) silica and (D) carbon black were used in combination with a total amount of less than 30 parts by weight of (B) clay and (C)

silica based on 100 parts by weight of the rubber component, and in Comparative Example 6 wherein (B) clay, (C) silica and (D) carbon black were used in a total amount of more than 100 parts by weight.

## Claims

1. A rubber composition for tyre treads which comprises (A) 100 parts by weight of a diene rubber comprising at least 35% by weight of a styrene-butadiene rubber, (B) 5 to 50 parts by weight of clay, (C) at least 5 parts by weight of silica having a nitrogen absorption specific surface area of 100 to 300 $m^2$/g and (D) 5 to 65 parts by weight of carbon black having a nitrogen absorption specific surface area of 70 to 300 $m^2$/ g, and has a total amount of (B) clay and (C) silica of 40 to 79 parts by weight and a total amount of (B) clay and (C) silica and (D) carbon black of 41 to 80 parts by weight, wherein (B) clay has an average particle size of 0.5 to 10 $\mu$m.

2. A rubber composition for tyre treads according to claim 1 **characterized by** (E) a silane-coupling agent.

3. A pneumatic tyre, **characterized by** a tread made of the rubber composition of claim 1 or 2.

## Patentansprüche

1. Kautschukzusammensetzung für Reifenlaufflächen, welche umfaßt: (A) 100 Gew.-Teile eines Dienkautschuks, umfassend wenigstens 35 Gew.-% eines Styrol-Butadienkautschuks, (B) 5 bis 50 Gew.-Teile Ton, (C) wenigstens 5 Gew.-Teile Siliziumdioxid mit einer spezifischen Oberfläche mittels Stickstoffabsorption von 100 bis 300 $m^2$/g und (D) 5 bis 65 Gew.-Teile Ruß mit einer spezifischen Oberfläche mittels Stickstoffabsorption von 70 bis 300 $m^2$/g, und welche eine Gesamtmenge von (B) Ton und (C) Siliziumdioxid von 40 bis 79 Gew.-Teilen und eine Gesamtmenge von (B) Ton und (C) Siliziumdioxid und (D) Ruß von 41 bis 80 Gew.-Teilen hat, worin (B) Ton eine Durchschnittsteilchengröße von 0,5 bis 10 $\mu$m hat.

2. Kautschukzusammensetzung für Reifenlaufflächen entsprechend Anspruch 1, **gekennzeichnet durch** (E) ein Silan-Kupplun gsmittel.

3. Luftreifen, **gekennzeichnet durch** eine Lauffläche, die aus der Kautschukzusammensetzung von Anspruch 1 oder 2 hergestellt ist.

## Revendications

1. Composition de caoutchouc pour bande de roulement qui comprend (A) 100 parties en poids d'un caoutchouc de diène contenant au moins 35 % en poids d'un caoutchouc butadiène-styrène, (B) de 5 à 50 parties en poids d'argile, (C) au moins 5 parties en poids de silice ayant une surface spécifique par absorption d'azote de 100 à 300 $m^2$/g et (D) de 5 à 65 parties en poids de noir de carbone ayant une surface spécifique par absorption d'azote de 70 à 300 $m^2$/g, et qui a une quantité totale d'argile (B) et de silice (C) de 40 à 79 parties en poids et une quantité totale d'argile (B), de silice (C) et de noir de carbone (D) de 41 à 80 parties en poids, dans laquelle l'argile (B) a une taille moyenne de particules de 0,5 à 10 $\mu$m.

2. Composition de caoutchouc pour bande de roulement, selon la revendication 1, **caractérisé par** un agent de couplage silane (E).

3. Pneu, **caractérisé par** une bande de roulement fabriquée avec la composition de caoutchouc de la revendication 1 ou 2.